# EUROPÄISCHE PATENTSCHRIFT

(11) **EP 0 621 846 B1**
(45) Veröffentlichungstag und Bekanntmachung des Hinweises auf die Patenterteilung: **09.04.1997**
(21) Anmeldenummer: 93903207.4
(22) Anmeldetag: 20.01.1993
(51) Int. Cl.: B65B 25/02, B65B 25/06, A22C 7/00

(54) **EINRICHTUNG ZUM EINBINDEN VON FLEISCHPRODUKTEN**
APPARATUS FOR WRAPPING MEAT PRODUCTS
APPAREIL SERVANT A ENVLOPPER DE LA VIANDE

(30) Priorität: 24.01.1992 DE 4201863
(43) Veröffentlichungstag der Anmeldung: 02.11.1994
(73) Patentinhaber: RÜHLE, Marlene, D-79865 Grafenhausen (DE)
(72) Erfinder: RÜHLE, Claus-Dieter, D-79865 Grafenhausen (DE)
(74) Vertreter: Patent- und Rechtsanwaltssozietät, Schmitt, Maucher & Börjes
(86) Internationale Anmeldenummer: EP9300122
(87) Internationale Veröffentlichungsnummer: WO9314977

(56) Entgegenhaltungen:
- EP-A- 0 175 173
- EP-A- 0 198 486
- CH-A- 420 900
- US-A- 3 477 860

## Beschreibung

Die Erfindung bezieht sich auf eine Einrichtung zum Einbinden von Fleischprodukten in eine elastische Umhüllung, wobei die Einrichtung eine Spreiz- und Offenhaltevorrichtung für die Umhüllung aufweist, wie aus US-A-3 477 860 beispielsweise bekannt.

Spezielle Fleischprodukte wie zum Beispiel Braten oder Kochschinken werden in elastische Netze oder dergleichen eingebunden, um dadurch ein geschmacklich besseres Produkt zu erzielen.
Um ein solches Netz auf ein Fleischstück zu ziehen, ist bereits ein Hilfsgerät bekannt, das im wesentlichen aus einem Rohr besteht, auf welches das Netz aufgezogen wird. Von diesem Rohr wird dann das Netz heruntergeschoben und auf das Fleischstück aufgebracht.

Nachteilig ist hierbei, daß das Aufziehen des Netzes auf das Rohr vergleichsweise viel Kraft und auch handwerkliches Geschick erfordert.
Weiterhin ist ein Gerät bereits bekannt, bei dem beispielsweise sechs Spreizstäbe von einer Ausgangsstellung mit nahe beieinanderliegenden Spreizstäben nach außen in eine Spannstellung gebracht werden können. Ein in der Ausgangsstellung der Spannstäbe auf diese aufgebrachtes Netz wird dabei aufgespannt und kann dann über ein Fleischstück gezogen werden. Zum Betätigen der Spreizstäbe ist ein pneumatischer oder elektrischer Antrieb vorgesehen, so daß auch dadurch ein vergleichsweise großer Aufwand vorhanden ist.

Aufgabe der vorliegenden Erfindung ist es, eine im Aufbau einfache und leicht mit wenig Kraftaufwand manuell zu bedienende Vorrichtung der eingangs erwähnten Art zu schaffen, die darüber hinaus nur wenig Platz beansprucht.

Die Lösung dieser Aufgabe erfolgt mit den Merkmalen des Anspruchs 1.

Die elastische Umhüllung kann bei dieser Vorrichtung sowohl über die feststehende Auflage als auch das in Ausgangsstellung bei der Auflage befindliche Spreizelement gezogen werden. Durch Betätigen des Spreizelementes wird dann die Umhüllung aufgespannt, wobei als Widerlager die feststehende Auflage dient. Anschließend kann das zuvor auf die Auflage zugeführte Fleischstück zusammen mit der Umhüllung abgenommen werden, wobei das Spreizelement in der Spreizstellung bleiben kann, jedoch auch in eine Zwischenstellung oder in die Ausgangsstellung verfahren werden könnte. Die Einrichtung ermöglicht eine einfache Handhabung, wobei durch die feststehende Auflage das Fleischstück darauf abgelegt und die notwendigen Handhabungen zum Überziehen der in der Regel aus einem Netz bestehenden Umhüllung vorgenommen werden kann.

Zur einfachen Handhabung trägt auch mit bei, daß bei Betätigung des Spreizelementes die Lage des Fleischstückes nicht verändert wird.

Eine praktische Ausführungsform der Erfindung sieht vor, daß die Auflage als rinnenförmige und an einem Schmalseitenende mit einer Halterung verbundene Schale ausgebildet ist und das Spreizelement durch wenigstens einen Stab, vorzugsweise einen etwa U-förmigen, an seinem freien Ende geschlossenen Bügel gebildet ist.
Die Auflage ist dadurch für das Einlegen des Fleischstückes gut zugänglich und durch die Ausbildung des Spreizelementes ist sowohl das Aufbringen der Umhüllung als auch das Abziehen zusammen mit dem Fleischstück einfach durchführbar.

Nach einer Ausführungsform der Erfindung ist vorgesehen, daß die Halterung im wesentlichen durch eine etwa vertikal angeordnete Grundplatte gebildet ist, an der etwa rechtwinklig die rinnenförmige Schale mit Abstand zur unteren Auflageseite der Grundplatte befestigt ist und daß ein an der Grundplatte höhenverschiebbar gelagerter Schieber mit daran befestigtem Spreizelement vorgesehen ist.
Die rinnenförmige Schale und das darüber befindliche Spreizelement befinden sich dadurch in einer für die Handhabung, insbesondere auch das Überziehen des Netzes günstigen Lage.

Eine bevorzugte Ausführungsform der Erfindung sieht vor, daß der Schieber mit einem manuellen Antrieb, vorzugsweise einem Kniehebel-Antrieb oder dergleichen mit einem Betätigungshebel verbunden ist.

Durch den manuellen Antrieb ist der Gesamtaufwand für die erfindungsgemäße Einrichtung vergleichsweise gering und der Kniehebel-Antrieb begünstigt einen geringen Kraftaufwand bei der Betätigung des Spreizelementes.
Ein verringerter Herstellungsaufwand ergibt sich, wenn am Schieber ein quer, vorzugsweise rechtwinklig zur Bewegungsrichtung orientierter Schlitz oder dergleichen Führungselement zum Eingreifen des Kurbelzapfens vorgesehen ist.

Eine Weiterbildung der Erfindung sieht vor, daß die Grundplatte eine Durchtrittsöffnung für ein einzubindendes Fleischprodukt aufweist, daß auf der einen Seite der Grundplatte im Anschluß an die Durchtrittsöffnung die rinnenförmige Schale angebracht ist und daß gegebenenfalls auf der anderen Seite der Grundplatte im Anschluß an die Durchtrittsöffnung eine vorzugsweise rinnenförmige Einlegewanne vorgesehen ist.
Das Fleischstück kann bei dieser Ausführungsform der Vorrichtung in die Einlegewanne abgelegt werden, so daß dann für das Aufziehen und Spannen des Netzes oder dergleichen Umhüllung beide Hände frei sind. Ist die Umhüllung aufgespannt, kann das Fleischstück durch die Durchtrittsöffnung hindurch in die Umhüllung eingeschoben werden.

Zusätzliche Ausgestaltungen der Erfindung sind in den weiteren Unteransprüchen aufgeführt.

Nachstehend ist die Erfindung mit ihren wesentlichen Einzelheiten anhand der Zeichnungen noch näher erläutert.

Es zeigt:
- **Fig. 1**: eine perspektivische Ansicht einer erfindungsgemäßen Einrichtung,
- **Fig. 2**: eine vereinfachte, perspektivische Ansicht der Einrichtung mit in Ausgangsstellung zum Aufziehen einer Umhüllung befindlichem Spreizelement,
- **Fig. 3**: eine etwa Figur 2 entsprechende Darstellung, hier jedoch mit in Spannstellung befindlichem Spreizelement,
- **Fig. 4**: eine Vertikal-Schnittdarstellung der Einrichtung,
- **Fig. 5**: eine Detaildarstellung im Bereich einer Führungslagerung und
- **Fig. 6**: eine Detaildarstellung im Bereich eines Abstandhalters.

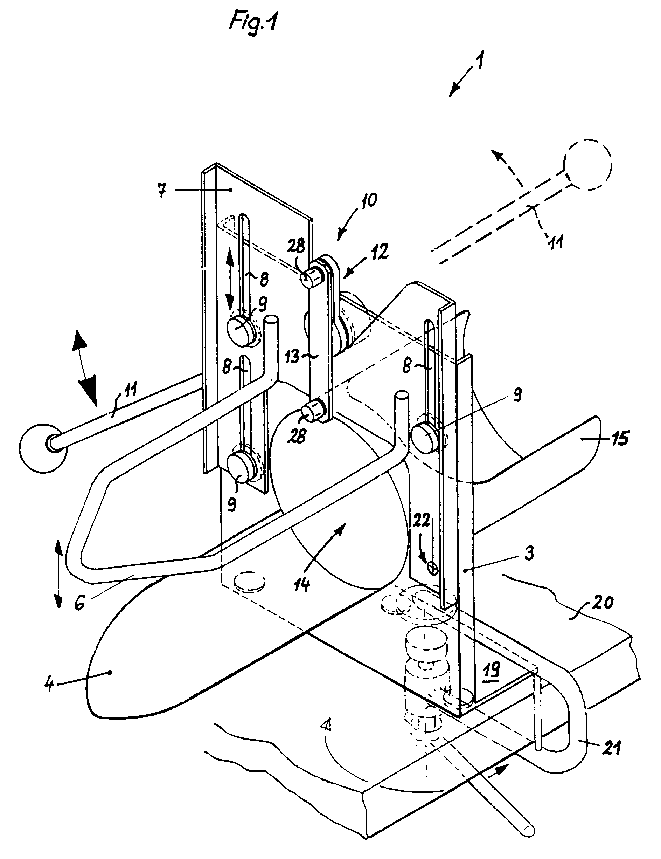

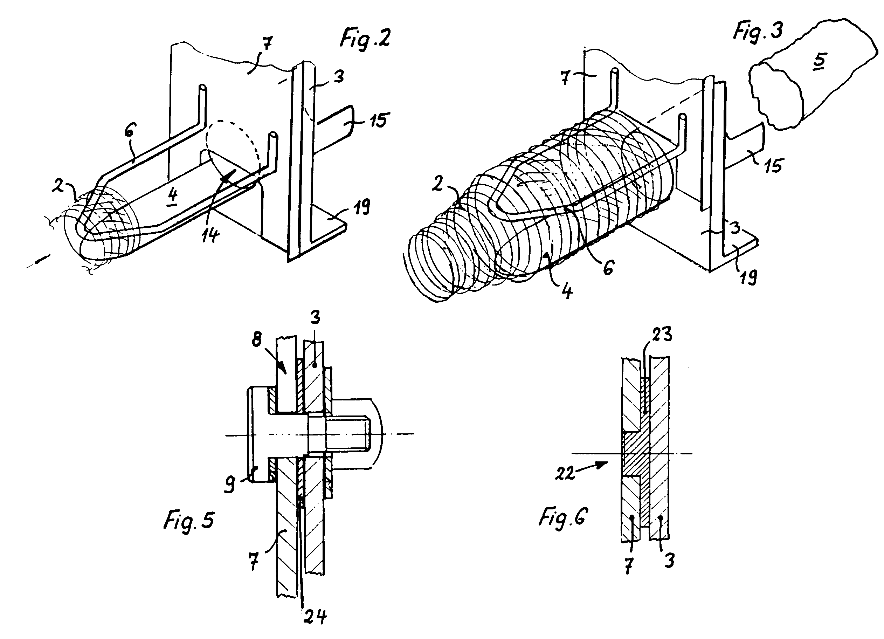

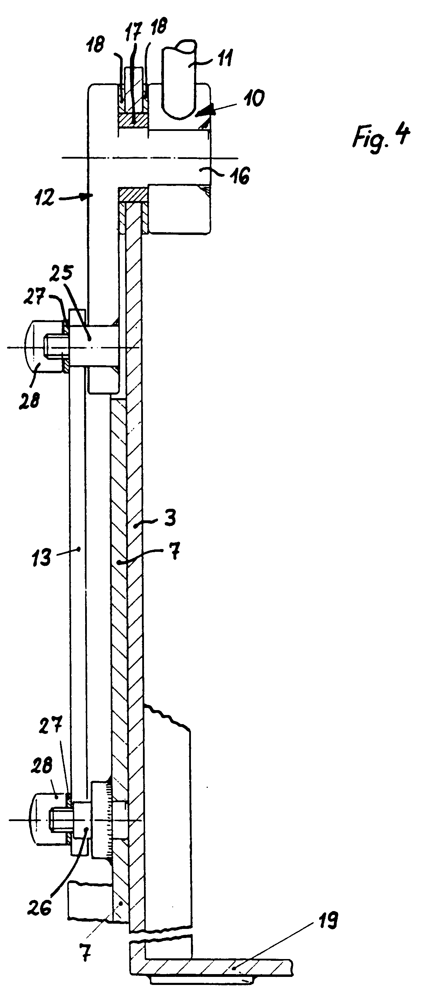

Eine in Figur 1 gezeigte Einrichtung 1 dient zum Einbinden von Fleischprodukten, insbesondere von Braten oder Kochschinken in eine elastische Umhüllung. Diese ist üblicherweise durch ein elastisches Netz 2 (vgl. Fig. 2 und 3) gebildet.

Die Vorrichtung weist im wesentlichen eine als Halterung dienende Grundplatte 3 mit einer daran angebrachten, feststehenden Auflage 4 für ein Fleischstück 5 sowie ein in seinem Abstand zur Auflage 4 veränderba res Spreizelement 6 auf.

Das Spreizelement 6 ist mit einer Schlittenplatte 7 verbunden, die höhenverschiebbar an der vertikalen Grundplatte 3 gelagert ist. Als Schiebeführung sind im Ausführungsbeispiel an der Schlittenplatte 7 vertikale Längsschlitze 8 vorgesehen, in die mit der Grundplatte 3 verbundene Bundbolzen 9 eingreifen. Die Länge der Schlitze 8 ist so bemessen, daß das Spreizelement 6 zwischen der in Figur 2 gezeigten Ausgangsstellung und der in Figur 1 und 3 gezeigten Spreizstellung hin- und herbewegt werden kann.

Als Antrieb für diese Bewegung ist im Ausführungsbeispiel ein Kniehebel-Antrieb 1o vorgesehen, der durch einen Handhebel 11 betätigbar ist.
Der Antrieb 1o weist eine vorzugsweise mittig von der Grundplatte 3 an deren oberen Ende gelagerte Antriebskurbel 12 mit einem am Kurbelende angreifenden Zughebel 13 auf. Das andere Ende des Zughebels 13 ist an der Schlittenplatte 7 drehbar befestigt.
In Figur 1 befindet sich die Antriebskurbel 12 in ihrer oberen Totpunktstellung und somit das an der Schlittenplatte 7 angebrachte Spreizelement 6 in der maximalen Spreizstellung (vgl. auch Fig. 3).

Das Spreizelement 6 ist als geschlossener U-Bügel ausgebildet, dessen Schenkelenden an der Schlittenplatte 7 befestigt sind. Das geschlossene, freie Ende ist im Bereich des Verbindungsbügels etwa V-förmig ausgebildet, um das Überziehen des Netzes 2 zu begünstigen. Auch das freie Ende der rinnenförmigen Auflage 4 weist eine entsprechende Formung auf.

Die rinnenförmige Auflage 4 ist anschließend an den unteren Randbereich einer Durchtrittsöffnung 14 in der Grundplatte 3 angeordnet. Auf der anderen Seite der Grundplatte 3 schließt sich etwa fluchtend zu der Auflage 4 eine ebenfalls rinnenförmige Schale 15 an. Von dieser Seite her kann das einzubindende Fleischstück zugeführt und durch die Durchtrittsöffnung 14 der Grundplatte 3 hindurch in das zwischen der Auflage 4 und dem Spreizelement 6 aufgespreizte Netz 2 geschoben werden, wie dies in Figur 3 angedeutet ist.
Anschließend kann das Fleischstück 5 zusammen mit dem aufgespannten Netz 2 abgenommen werden, wobei sich das Netz dann dicht um das Fleischstück 5 legt. Gegebenenfalls kann das Netz vor dem Abstreifen auf das Fleischstück 5 abgelängt werden.

Wenn das im wesentlichen U-förmige Spreizelement 6 etwas größer als der Umriß der darunterbefindlichen Auflage ausgebildet ist, kann das Spreizelement 6 nach dem Einschieben des Fleischstückes in das aufgespannte Netz auch abgesenkt werden, wobei dieses Absenken bis etwa in die Ebene der Auflage 4 oder etwas darunter erfolgen kann. In diesem Falle würde sich dann das Netz bereits in dieser Lage etwa dreiseitig um das Fleischstück 5 legen und praktisch mit diesem verbunden sein. Beim Entnehmen des Fleischstückes wird dann nur noch der unter die Auflage 4 greifende Teil des Netzes abgezogen.
Für eine einfache Handhabung ist noch von Bedeutung, daß der Handhebel 11 in der in Figur 1 und 3 gezeigten Lage des Spreizelementes 6 nicht von Hand gehalten werden muß, da sich in dieser Spannlage der Kniehebel-Antrieb 1o in seiner einen Totpunktlage befindet, beziehungsweise auch noch etwas über diesen Totpunkt hinaus gegen einen hier nicht dargestellten Anschlag anliegen kann. Es ist also trotz der vom Netz 2 einwirkenden Vorspannung ein selbstätiges Halten des Spreizelementes 6 in Spannlage gegeben, so daß beide Hände für die weitere Handhabung beim Einschieben des Fleischstückes ins Netz, beim Abschneiden des Netzes und auch für das Abnehmen des umhüllten Fleischstückes frei sind.

Figur 4 läßt gut den Aufbau des Kniehebel-Antriebes 1o erkennen. Die Antriebskurbel 12 ist mit ihrem Wellenzapfen 16 in einer mit der Grundplatte 3 verbundenen Lagerbuchse 17 gelagert. Auf beiden Seiten der Grundplatte 3 befinden sich zur seitlichen Abstützung der Antriebskurbel 12 vorzugsweise aus Kunststoff bestehende Unterlagsscheiben 18. Am freien Kurbelende greift drehbar um einen Kurbelzapfen 25 gelagert der Zughebel 13 an, der am anderen Ende ebenfalls drehbar über einen Mitnehmerbolzen 26 mit der Schlittenplatte 7 verbunden ist.Beim Kurbelzapfen 25 und beim Mitnehmerbolzen 26 sind zum Befestigen des Zughebels 13 jeweils eine Unterlagscheibe 27 sowie eine Hutmutter 28 vorgesehen.

Der Kniehebel-Antrieb 1o befindet sich in Figur 4 in der unteren Totpunktstellung.

Am unteren Ende der Grundplatte 3 ist als Auflage eine Abwinklung 19 (vgl. Fig. 1 bis 4) vorgesehen, die auch zum Festspannen der Einrichtung 1 auf einer Tischplatte 2o dient. Zum Festklemmen kann ein zwingenartiger Befestigungsbügel 21 vorgesehen sein. Die Einrichtung läßt sich so als mobiles Handgerät an unterschiedlichen Arbeitsplätzen einsetzen.

Im Ausführungsbeispiel gemäß Figur 1 sind drei Schiebeführungen mit Längsschlitzen 8 und Bundbolzen 9 vorgesehen. Dabei befinden sich auf der einen Seite der Grundplatte 8 beziehungsweise der Schlittenplatte 7 übereinander zwei vertikal miteinander fluchtende Längsschlitze 8 mit Bundbolzen 9, während auf der anderen Seite eine solche Führung nur am oberen Ende der Schlittenplatte 7 vorgesehen ist. In Verlängerung darunter befindet sich hier ein Abstandhalter 22, der in Figur 6 im Schnitt dargestellt ist. Der Abstandhalter 22 besteht im wesentlichen aus einer Kunststoffscheibe 23, die mit einem in eine Bohrung der Schlittenplatte 7 eingreifenden Ansatz versehen ist. Dadurch ist die Abstandhalter-Scheibe mit der Schlittenplatte 7 gegen seitliches verschieben festgelegt und hält diese und die Grundplatte 3 auf Abstand.

Die Schnittdarstellung gemäß Figur 5 zeigt den Bereich einer Lagerstelle mit einem Bundbolzen 9, der einerseits den Längsschlitz 8 der Schlittenplatte 7 und andererseits eine Befestigungsbohrung der Grundplatte 3 durchgreift. Auch hier ist zwischen den beiden Platten 3 und 7 eine Abstandhalter-Kunststoffscheibe 24 vorgesehen, durch die die beiden Platten jeweils nur im Bereich dieser Abstandhalter sowie des Abstandhalters 22 reibungsarm aneinanderliegen. Dadurch wird eine gute Leichtgängigkeit beim verschieben der Schlittenplatte 7 erreicht. Die Schlittenplatte 7 befindet sich hier in der unteren Ausgangsstellung.

Anstatt der im Ausführungsbeispiel gezeigten Schiebeführung mit Längsschlitzen 8 und Bundbolzen 9 könnten die beiden Platten 3 und 7 auch formschlüssig ineinandergreifende Randformungen oder dergleichen aufweisen, so daß sie in Längsschieberichtung praktisch ineinander steckbar sind. Auch bei dieser Ausführungsform könnten gegebenenfalls die in Figur 6 gezeigten Abstandhalter 22 zwischen den beiden Platten vorgesehen sein. Im Bereich des Kniehebel-Antriebes 1o kann anstatt eines Zughebels 13 der Kurbelzapfen 25 (Fig. 4) direkt an der Schlittenplatte 7 angreifen, wobei diese dann einen quer, vorzugsweise rechtwinklig zur Bewegungsrichtung orientierten Schlitz als Führungskurve zum Eingreifen des Kurbelzapfens 25 aufweist.

## Patentansprüche

1. Einrichtung zum Einbinden von Fleischprodukten in eine elastische Umhüllung, die eine Spreiz- und Offenhaltevorrichtung für die Umhüllung sowie eine feststehende Auflage (4) für das einzubindende Fleischprodukt (5) als Bestandteil der Spreiz- und Offenhaltevorrichtung aufweist, **dadurch gekennzeichnet**, daß der Querschnittsumfang der Spreiz- und Offenhaltevorrichtung etwa dem lichten Innenumfang der entspannten elastischen Umhüllung (2) entspricht und daß dieser Auflage ein Spreizelement (6) zugeordnet ist, das in seinem Abstand zur Auflage von einer zumindest in der Nähe der Auflage (4) befindlichen Ausgangsstellung bis zu einer maximalen Spreizstellung veränderbar und mit einem Antrieb (10) versehen ist.

2. Einrichtung nach Anspruch 1, dadurch gekennzeichnet, daß die Auflage (4) als rinnenförmige und an einem Schmalseitenende mit einer Halterung verbundene Schale ausgebildet und das Spreizelement (6) durch wenigstens einen Stab, vorzugsweise einen etwa U-förmigen, an seinem freien Ende geschlossenen Bügel gebildet ist.

3. Einrichtung nach Anspruch 2, dadurch gekennzeichnet, daß die Halterung im wesentlichen durch eine etwa vertikal angeordnete Grundplatte (3) gebildet ist, an der etwa rechtwinklig die rinnenförmige Schale mit Abstand zur unteren Auflageseite der Grundplatte befestigt ist, und daß ein an der Grundplatte höhenverschiebbar gelagerter Schieber (7) mit daran befestigtem Spreizelement (6) vorgesehen ist.

4. Einrichtung nach Anspruch 3, dadurch gekennzeichnet, daß der Schieber (7) mit einem manuellen Antrieb, vorzugsweise einen Betätigungshebel (11) aufweisenden Kniehebel-Antrieb (10) verbunden ist.

5. Einrichtung nach Anspruch 4, dadurch gekennzeichnet, daß der Kniehebel-Antrieb (10) eine vorzugsweise mittig im oberen Endbereich der Grundplatte (3) gelagerte Antriebskurbel (12) aufweist, an deren Kurbelende drehbar über einen Kurbelzapfen (25) ein Zughebel (13) angreift, dessen anderes Ende mit dem Schieber (7) verbunden ist.

6. Einrichtung nach einem der Ansprüche 3 bis 5, dadurch gekennzeichnet, daß am Schieber (7) ein rechtwinklig zur Bewegungsrichtung orientierter Schlitz oder dergleichen Führungselement zum Eingreifen des Kurbelzapfens (25) vorgesehen ist.

7. Einrichtung nach einem dar Ansprüche 3 bis 6, dadurch gekennzeichnet, daß der mit dem Spreizelement (6) verbundene Schieber als Schlittenplatte (7) ausgebildet ist, die verschiebbar auf der Grundplatte (3) aufliegt, und daß die Platten über eine Schiebeführung miteinander verbunden sind.

8. Einrichtung nach einem der Ansprüche 3 bis 7, dadurch gekennzeichnet, daß die Grundplatte (3) eine Durchtrittsöffnung (14) für ein einzubindendes Fleischprodukt (5) aufweist, daß auf der einen Seite der Grundplatte im Anschluß an die Durchtrittsöffnung die rinnenförmige Schale (4) angebracht ist und daß gegebenenfalls auf der anderen Seite der Grundplatte im Anschluß an die Durchtrittsöffnung eine vorzugsweise rinnenförmige Einlegewanne (15) vorgesehen ist.

9. Einrichtung nach Anspruch 8, dadurch gekennzeichnet, daß die Schlittenplatte (7) im Bereich der Durchtrittsöffnung der Grundplatte (3) einen Ausschnitt aufweist.

10. Einrichtung nach einem der Ansprüche 3 bis 9, dadurch gekennzeichnet, daß als Schiebeführung in einer der beiden Platten in Schieberichtung orientierte Längsschlitze (8) und bei der anderen Platte in die Längsschlitze eingreifende Bundbolzen (9) oder dergleichen vorgesehen sind.

11. Einrichtung nach einem der Ansprüche 3 bis 9, dadurch gekennzeichnet, daß als Schiebeführung formschlüssig ineinandergreifende Randformungen der vorzugsweise als Blechplatten ausgebildeten Schlitten- und Grundplatte vorgesehen sind.

12. Einrichtung nach einem der Ansprüche 3 bis 11, dadurch gekennzeichnet, daß die Grundplatte (3) unterseitig als Auflageplatte eine Abwinklung (19) aufweist und daß zum Verbinden der Grundplatte (3) mit einer Unterlage wenigstens ein zwingenartiger Befestigungsbügel (21) vorgesehen ist.

13. Einrichtung nach einem der Ansprüche 1 bis 12, dadurch gekennzeichnet, daß das Spreizelement (6) bei einer ein- oder mehrfingerförmigen Ausbildung zumindest unter die Oberseite des einzubindenden Fleischproduktes (5) oder bei einer U-bügelförmigen Ausbildung bis zu oder unter die von der rinnenförmigen Schale (4) gebildeten Auflageebene absenkbar ist.

14. Einrichtung nach einem der Ansprüche 1 bis 13, dadurch gekennzeichnet, daß das Spreizelement etwa parallel oder schräg mit zum freien Ende sich verringerndem Abstand zur feststehenden Auflage (4) angeordnet ist.

## Claims

1. An apparatus for wrapping meat products with an elastic material, the apparatus having a device which spreads the elastic wrapping and holds it open and further having as a component of the latter device a fixed support (4) for the meat product (5) to be wrapped, **characterized in that** the cross-sectional extent of the spreading and holding-open device corresponds approximately to the inside extent of the slack elastic material (2) and that allocated to said support (4) is a spreader (6) which is variable in distance from the support from an initial position at least in the vicinity of the support (4) to a maximum spreading position and is provided with a drive (10).

2. An apparatus as claimed in claim 1, characterized in that the support (4) takes the form of a trough-shaped pan connected at a narrow end to a mount and the spreading element (6) is formed by at least one rod, preferably a substantially U-shaped bow closed at the free end thereof.

3. A device as claimed in claim 2, characterized in that the mount is essentially formed by a mounting plate (3) arranged substantially vertically, and attached approximately at right angles thereto and in spaced relationship to the lower supporting side of the mounting plate is the trough-shaped pan, and that a slide (7) with spreader (6) attached thereto is provided mounted on the mounting plate so as to be vertically slidable.

4. An apparatus as claimed in claim 3, characterized in that the slide (7) is connected to a manual drive, preferably a toggle lever system (10) having an operating lever (11).

5. An apparatus as claimed in claim 4, characterized in that the toggle lever system (10) has a driving crank (12) mounted preferably centrally in the upper end zone of the mounting plate (3), the crank end thereof being rotatably acted upon, via a crank pin (25), by a draw lever (13) whose other end is connected to the slide (7).

6. An apparatus as claimed in any one of claims 3 to 5, characterized in that the slide (7) is provided with a slot oriented at right angles to the direction of movement or is provided with a similar guide element for engagement with the crank pin (25).

7. An apparatus as claimed in any one of claims 3 to 6, characterized in that the slide connected to the spreader (6) takes the form of a slide plate (7) slidably resting on the mounting plate (3) and that the plates are interconnected by way of a sliding guide.

8. An apparatus as claimed in any one of claims 3 to 7, characterized in that the mounting plate (3) has an opening (14) therethrough for a meat product (5) to be wrapped, that the trough-shaped pan (4) is fitted adjoining the opening on the one side of the mounting plate, and that adjoining the opening on the other side of the mounting plate there may be a preferably trough-shaped feed tray (15).

9. An apparatus as claimed in claim 8, characterized in that the slide plate (7) has a cutaway portion in the region of the opening through the mounting plate (3).

10. An apparatus as claimed in any one of claims 3 to 9, characterized in that the sliding guide takes the form of longitudinal slots (8) oriented in the sliding direction provided in one of the two plates and flange bolts (9) or the like provided in the other plate and engaging with the longitudinal slots.

11. An apparatus as claimed in any one of claims 3 to 9, characterized in that the sliding guide takes the form of interlocking formations provided at the edges of the slide plate and mounting plate preferably in the form of sheet metal plates.

12. An apparatus as claimed in any one of claims 3 to 11, characterized in that at the bottom side the mounting plate (3) has a bend (19) as supporting plate and that at least one clamp-like fastening bow (21) is provided for connecting the mounting plate (3) to a base.

13. An apparatus as claimed in any one of claims 1 to 12, characterized in that the spreader (6), when configured in the shape of a finger or a plurality of fingers, is lowerable at least under the upper side of the meat product (5) to be wrapped, or, when configured in the shape of a U-bow, is lowerable as far as or under the supporting level formed by the trough-shaped pan (4).

14. An apparatus as claimed in any one of claims 1 to 13, characterized in that the spreader is arranged approximately parallel to the fixed support (4) or slantwise thereto at a distance diminishing towards the free end.

## Revendications

1. Dispositif de ligaturage de produits carnés, dans une enveloppe élastique, présentant un dispositif d'écartement et de maintien ouvert de l'enveloppe, ainsi qu'une embase (4) fixe pour le produit carné (5) à ligaturer, à titre de constituant du dispositif d'écartement et de maintien ouvert, caractérisé en ce que la périphérie de la section transversale du dispositif d'écartement et de maintien ouvert correspond à peu près à la périphérie intérieure libre de l'enveloppe (2) élastique détendue et en ce qu'à cette embase est associé un élément d'écartement (6), dont l'espacement vis-à-vis de l'embase est modifiable depuis une position initiale se trouvant au moins à proximité de l'embase (4) jusqu'à une position d'écartement maximale et est pourvu d'un entraînement (10).

2. Dispositif selon la revendication 1, caractérisé en ce que l'embase (4) est réalisée sous forme de coque en forme de goulotte et reliée à son extrémité étroite à une fixation et l'élément d'écartement (6) est constitué par au moins une barre, de préférence un étrier ayant à peu près la forme d'un U et fermé à son extrémité libre.

3. Dispositif selon la revendication 2, caractérisé en ce que la fixation est constituée essentiellement par une plaque de base (3) disposée à peu près verticalement, plaque de base sur laquelle la coque en forme de goulotte est fixée à peu près perpendiculairement à distance par rapport à la face de pose inférieure de la plaque de base et en ce qu'est prévu un coulisseau (7) monté de façon à pouvoir être déplacé en hauteur sur la plaque de base, avec un élément d'écartement (6) fixé sur lui.

4. Dispositif selon la revendication 3, caractérisé en ce que le coulisseau (7) est relié à un entraînement manuel, de préférence un entraînement à levier à genouillère (10) présentant un levier d'actionnement (11).

5. Dispositif selon la revendication 4, caractérisé en ce que l'entraînement à levier à genouillère (10) présente une manivelle d'entraînement (12), montée de préférence centralement dans la zone d'extrémité supérieure de la plaque de base (3), manivelle d'entraînement sur l'extrémité de laquelle agit avec possibilité de rotation un levier de traction (13), par l'intermédiaire d'un tenon de manivelle (25), levier de traction dont l'autre extrémité est reliée au coulisseau (7).

6. Dispositif selon l'une des revendications 3 à 5, caractérisé en ce que sur le coulisseau (7) est prévue une fente, ou un élément de guidage analogue, orienté(e) à angle droit par rapport à la direction de déplacement, pour l'engagement du tenon de manivelle (25).

7. Dispositif selon l'une des revendications 3 à 6, caractérisé en ce que le coulisseau relié à l'élément d'écartement (6) est réalisé sous forme de plaque de chariot (7), reposant avec possibilité de déplacement sur la plaque de base (3) et en ce que les plaques sont reliées ensemble par l'intermédiaire d'un guidage coulissant.

8. Dispositif selon l'une des revendications 3 à 7, caractérisé en ce que la plaque de base (3) présente une ouverture de passage (14) destinée à un produit carné (5) à ligaturer, en ce que la coque (4) en forme de goulotte est montée sur une face de la plaque de base, à la suite de l'ouverture de passage et en ce que, le cas échéant, de l'autre côté de la plaque de base est prévue une auge d'insertion (15), de préférence en forme de goulotte, faisant suite à l'ouverture de passage.

9. Dispositif selon la revendication 8, caractérisé en ce que la plaque de chariot (7) présente une échancrure ménagée dans la zone de l'ouverture de passage de la plaque de base (3).

10. Dispositif selon l'une des revendications 3 à 9, caractérisé en ce que sont prévues des fentes longitudinales (8) faisant office de guidage de coulissement, ménagées dans l'une des deux plaques et orientées dans la direction de coulissement et des boulons à collerette d'embase (9) ou analogues s'engageant dans les fentes longitudinales sont prévus dans l'autre plaque.

11. Dispositif selon l'une des revendications 3 à 9, caractérisé en ce que des reliefs de bordure, agissant avec ajustement de forme les uns dans les autres et faisant office de guidage coulissant, sont prévus sur la plaque de chariot et la plaque de base qui sont réalisées de préférence sous forme de plaques en tôle.

12. Dispositif selon l'une des revendications 3 à 11, caractérisé en ce que la plaque de base (3) présente en face inférieure à titre de plaque de pose un repli (19) et en ce que, pour assurer la liaison entre la plaque de base (3) et une sous-plaque, est prévu au moins un étrier de fixation (21) du genre d'un crampon.

13. Dispositif selon l'une des revendications 1 à 12, caractérisé en ce que l'élément d'écartement (6), lorsque la réalisation est en forme d'un ou plusieurs doigts, peut être abaissé au moins sous la face supérieure du produit carné (5) à ligaturer ou bien lorsqu'il s'agit d'une réalisation en forme d'étrier jusqu'à ou sous le plan de pose constitué par la coque (4) en forme de goulotte.

14. Dispositif selon l'une des revendications 1 à 13, caractérisé en ce que l'élément d'écartement est disposé à peu prés parallèlement ou obliquement avec un espacement allant en diminuant en direction de l'extrémité libre, vis-à-vis de l'embase (4) fixe.
